(19) Europäisches Patentamt
European Patent Office
Office européen des brevets

(11) **EP 4 206 989 A1**

(12) **EUROPEAN PATENT APPLICATION**
published in accordance with Art. 153(4) EPC

(43) Date of publication:
**05.07.2023 Bulletin 2023/27**

(21) Application number: **21865703.9**

(22) Date of filing: **22.07.2021**

(51) International Patent Classification (IPC):
**G06N 3/04** $^{(2023.01)}$

(52) Cooperative Patent Classification (CPC):
**G06F 18/00; G06N 3/04; G06N 3/08**

(86) International application number:
**PCT/CN2021/107753**

(87) International publication number:
**WO 2022/052647 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2020 CN 202010957768**

(71) Applicants:
• **Huawei Technologies Co., Ltd.**
  **Shenzhen, Guangdong 518129 (CN)**
• **Nanjing University**
  **Jiangsu 210093 (CN)**

(72) Inventors:
• **XU, Fengyuan**
  **Nanjing, Jiangsu 210023 (CN)**
• **WU, Hao**
  **Nanjing, Jiangsu 210023 (CN)**
• **TIAN, Xuejin**
  **Nanjing, Jiangsu 210023 (CN)**
• **TAO, Zhe**
  **Shenzhen, Guangdong 518129 (CN)**
• **CAO, Jianlong**
  **Shenzhen, Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **DATA PROCESSING METHOD, NEURAL NETWORK TRAINING METHOD, AND RELATED DEVICE**

(57)    Embodiments of this application disclose a data processing method. The method may be applied to the field of sequence data processing of artificial intelligence. The method includes: performing, by using a first neural network, deletion processing on information carried in first sequence data, to obtain second sequence data, where an amount of information carried in the second sequence data is less than an amount of information carried in the first sequence data; sending the second sequence data to a second execution device; and receiving a prediction result of the second sequence data that is sent by the second execution device, where the prediction result of the second sequence data is considered as a prediction result of the first sequence data. The first neural network is obtained through training by using a first loss function and a second loss function, the first loss function indicates the amount of information carried in the second sequence data, and the second loss function indicates a similarity between the prediction result of the first sequence data and a correct result of the first sequence data. An amount of information sent to a server is reduced, to reduce data in a risky state, so as to improve security of user data.

EP 4 206 989 A1

A training device obtains a training data set, where the training data set includes a plurality of pieces of fourth sequence data and a correct result of each piece of fourth sequence data — 301

The training device inputs the fourth sequence data into a third neural network, to obtain a prediction result of the fourth sequence data that is output by the third neural network — 302

The training device trains the third neural network based on a third loss function, where the third loss function indicates a similarity between the prediction result of the fourth sequence data and the correct result of the fourth sequence data — 303

The training device inputs the fourth sequence data into a first neural network, to perform, by using the first neural network, deletion processing on information carried in the fourth sequence data, so as to obtain fifth sequence data that is output by the first neural network — 304

The training device inputs the fifth sequence data into a second neural network, to obtain a prediction result of the fifth sequence data that is output by the second neural network — 305

The training device trains the first neural network based on a first loss function and a second loss function, where the first loss function indicates an amount of information carried in the fifth sequence data, and the second loss function indicates the similarity between the prediction result of the fourth sequence data and the correct result of the fourth sequence data — 306

FIG. 3

**Description**

This application claims priority to Chinese Patent Application No. 202010957768.3, filed with the China National Intellectual Property Administration on September 11, 2020 and entitled "DATA PROCESSING METHOD, NEURAL NETWORK TRAINING METHOD, AND RELATED DEVICE", which is incorporated herein by reference in its entirety.

**TECHNICAL FIELD**

This application relates to the field of artificial intelligence, and in particular, to a data processing method, a neural network training method, and a related device.

**BACKGROUND**

Artificial intelligence (Artificial Intelligence, AI) is a theory, method, technology, and application system that simulates, extends, and expands human intelligence, perceives an environment, obtains knowledge, and uses the knowledge to obtain an optimal result by using a digital computer or a digital computer-controlled machine. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

To make the artificial intelligence technology easy for ordinary users, some companies provide online inference services. Specifically, a service provider trains a neural network for a specific task, and deploys a trained neural network on a cloud server. When using an inference service, a user only needs to send to-be-processed data to the cloud server, to receive a prediction result corresponding to the to-be-processed data from the server.

The online inference service can avoid consumption of computer resources of a first execution device, to help improve user experience. However, because the to-be-processed data needs to be sent to the cloud server, a risk is caused to data security of the user.

**SUMMARY**

Embodiments of this application provide a data processing method, a neural network training method, and a related device, to reduce an amount of information sent to a server, so as to reduce data in a risky state, and improve security of user data. A first loss function indicates an amount of information carried in second sequence data, and a second loss function indicates a similarity between a prediction result and a correct result, that is, impact caused by reducing the amount of information on accuracy of the prediction result is reduced as much as possible.

To resolve the foregoing technical problem, embodiments of this application provide the following technical solutions.

According to a first aspect, an embodiment of this application provides a data processing method, and the method may be applied to the field of sequence data processing of artificial intelligence. The method includes: A first execution device inputs first sequence data into a first neural network, to perform, by using the first neural network, deletion processing on information carried in the first sequence data, so as to obtain second sequence data. An amount of information carried in the second sequence data is less than an amount of information carried in the first sequence data. The second sequence data may be considered as the sequence data obtained after privacy processing is performed on the first sequence data. If both the first sequence data and the second sequence data carry information of image data, the amount of information carried in each of the first sequence data and the second sequence data may be measured by using image entropy. The image entropy is a definition widely used in the image processing field, and may be used to measure an amount of information included in an image. The first execution device sends the second sequence data to a second execution device, and the second sequence data is used to indicate the second execution device to input the second sequence data into a second neural network, to generate a prediction result of the second sequence data by using the second neural network. A task objective of the second neural network is different from a task objective of the first neural network. The task objective of the first neural network is to delete an amount of information carried in sequence data, that is, preprocess the sequence data. The task objective of the second neural network is to generate a prediction result of the sequence data. The first execution device receives the prediction result of the second sequence data that is sent by the second execution device, and the prediction result of the second sequence data is considered as a prediction result of the first sequence data. The first neural network is obtained through training by using a first loss function and a second loss function, the first loss function indicates the amount of information carried in the second sequence data, and the second loss function indicates a similarity between the prediction result of the first sequence data and a correct result of the first sequence data, that is, the second loss function indicates a similarity between the prediction result of the second sequence data and the correct result of the first sequence data.

In this implementation, in the foregoing manner, an amount of information sent to a server can be reduced, to reduce data in a risky state, so as to improve security of user data. In addition, the first neural network is obtained through training by using the first loss function and the second loss function, the first loss function indicates the amount of information carried in the second sequence data, and the second loss function indicates the similarity between the prediction result and the correct result. Therefore, impact caused by reducing the amount of information sent to the server on accuracy of the prediction result is reduced as much as possible while the amount of information sent to the server is reduced.

In a possible implementation of the first aspect, the first loss function indicates a distance between the second sequence data and third sequence data. The second sequence data and the third sequence data each include at least one element, and a shape of the third sequence data is the same as a shape of the second sequence data; and a value range of one first element included in the second sequence data is a first value range, a value range of one second element included in the third sequence data is a second value range, a location of the second element in the second sequence data is consistent with a location of the first element in the first sequence data, and the second value range is located in a middle area of the first value range. For example, if the second sequence data is image data, and the first value range is 0 to 255, the second value range may be 100 to 150. For another example, if the second sequence data is audio data, and the first value range is -5 to 5, the second value range may be -1 to 1.

In this implementation, a value range of a third element in the second sequence data is the first value range. A larger value range of each element indicates more possibilities of value combinations of the plurality of elements, that is, entropy of the sequence data may be larger, and therefore a larger amount of data is carried. The value range of the second element in the third sequence data is the second value range, and the second value range is located in the middle area of the first value range. Therefore, the third sequence data carries a smaller amount of data, a training objective is to increase a similarity between the second sequence data and the third sequence data, so as to reduce the amount of information carried in the second sequence data in an iterative training process. In addition, increasing the similarity between the second sequence data and the third sequence data can maintain a statistical feature of the sequence data processed by the first neural network, so as to reduce impact on accuracy of the prediction result.

In a possible implementation of the first aspect, if value ranges of different elements in the plurality of elements included in the second sequence data are all the same, values of different elements in the plurality of elements included in the third sequence data are all the same.

In a possible implementation of the first aspect, the first loss function is a first-order distance, a second-order distance, a cosine distance, a Euclidean distance, a Mahalanobis distance, or another type of distance between the second sequence data and the third sequence data. A value of the second element is a median value of the first value range. In this implementation, the first loss function is the first-order distance between the second sequence data and the third sequence data. This can ensure that the first loss function can accurately reflect a difference between the second sequence data and the third sequence data, so as to improve security of user information.

In a possible implementation of the first aspect, a shape of input data of the first neural network is the same as a shape of output data of the first neural network, and a shape of the first sequence data is the same as a shape of the second sequence data. The first sequence data and the second sequence data each are a tensor, and that a shape of the first sequence data is the same as a shape of the second sequence data means that the first sequence data and the second sequence data each are an N-dimensional tensor, and a size of a first dimension in N dimensions of the first sequence data is the same as a size of a second dimension in N dimensions of the second sequence data, where N is an integer greater than or equal to 1, the first dimension is any dimension in the N dimensions of the first sequence data, and the second dimension is a dimension that is in the N dimensions of the second sequence data and that is the same as the first dimension. For example, if the first sequence data and the second sequence data each are image data, and that the two pieces of image data have a same shape means that the two pieces of image data have a same size and same channel data. For another example, if the first sequence data and the second sequence data each are non-image data, the first sequence data and the second sequence data may be represented as vectors. That the two vectors have a same shape means that the two vectors have a same length, that is, the two vectors include a same quantity of elements.

In this implementation, before the first neural network is added, to directly input the first sequence data into the second neural network to generate the prediction result of the first sequence data, the shape of the input data of the first neural network is the same as the shape of the output data of the first neural network, that is, the shape of the sequence data is not changed after the sequence data is processed by the first neural network, that is, after the first neural network is added and before the first neural network is set, the shape of the input data does not need to change, that is, a previous input habit of the user does not need to change, and there is no need to add another processing layer between the first neural network and the second neural network. This reduces computer resources and improves user experience.

In a possible implementation of the first aspect, the first sequence data is image data, text data, or audio data. Further, if the first sequence data carries information that is not image data, the first sequence data may be represented in a form of a vector If the first sequence data carries image data, the first sequence data may be represented as an M-dimensional tensor, where a value of M is an integer greater than or equal to 2. The first neural network is a convolutional neural network, a recurrent neural network, or a fully-connected neural network. If the first sequence data includes a time sequence relationship, the third neural network may be a recurrent neural network. If the first sequence data is image data that includes no time sequence relationship, the third neural network may be a convolutional neural network. If the first sequence data is non-image data that includes no time sequence relationship, the third neural network may be a fully-connected neural network. For example, when the fourth sequence data is image data, the first neural network may be specifically represented as a Unet model, an auto-incoder model, or another neural network.

In this implementation, the fourth sequence data may carry information of image data, audio data, or text data, and a plurality of representation forms of the first neural network are also disclosed, so that application scenarios of this solution are extended.

According to a second aspect, an embodiment of this application provides a data processing method, and the method may be applied to the field of sequence data processing of artificial intelligence. The method includes: The second execution device receives second sequence data sent by a first execution device, the second sequence data is obtained after the first execution device inputs first sequence data into a first neural network and performs, by using the first neural network, deletion processing on information carried in the first sequence data, and an amount of information carried in the second sequence data is less than an amount of information carried in the first sequence data. The second execution device inputs the second sequence data into a second neural network, to obtain a prediction result of the second sequence data that is output by the second neural network; and sends the prediction result of the second sequence data to the first execution device. The first neural network is obtained through training by using a first loss function and a second loss function, the first loss function indicates the amount of information carried in the second sequence data, and the second loss function indicates a similarity between a prediction result of the first sequence data and a correct result of the first sequence data.

In a possible implementation of the second aspect, the first loss function indicates a distance between the second sequence data and third sequence data. The second sequence data and the third sequence data each include at least one element, a value range of one first element included in the second sequence data is a first value range, a value range of one second element included in the third sequence data is a second value range, a location of the second element in the second sequence data is consistent with a location of the first element in the first sequence data, and the second value range is located in a middle area of the first value range.

In a possible implementation of the second aspect, the first loss function is a first-order distance between the second sequence data and the third sequence data, and a value of the second element is a median value of the first value range.

For specific implementation steps, meanings of nouns in the second aspect and possible implementations of the second aspect of embodiments of this application, and beneficial effects brought by each possible implementation, refer to descriptions in possible implementations of the first aspect. Details are not described herein again.

According to a third aspect, an embodiment of this application provides a neural network training method, and the method may be used in the field of sequence data processing of artificial intelligence. The training device obtains a training data set, where the training data set includes a plurality of pieces of fourth sequence data and a correct result of each piece of fourth sequence data. The training device inputs the fourth sequence data into a first neural network, to perform, by using the first neural network, deletion processing on information carried in the fourth sequence data, so as to obtain fifth sequence data that is output by the first neural network. An amount of information carried in the fifth sequence data is less than an amount of information carried in the fourth sequence data. The training device inputs the fifth sequence data into a second neural network, to obtain a prediction result of the fifth sequence data that is output by the second neural network, and the prediction result of the fifth sequence data is considered as a prediction result of the fourth sequence data. The training device performs iterative training on the first neural network based on a first loss function and a second loss function until a first preset condition is met. Specifically, after obtaining the fifth sequence data and the prediction result of the fifth sequence data (that is, the prediction result of the fourth sequence data), the training device may generate a function value of the first loss function and a function value of the second loss function, calculate a total function value based on the function value of the first loss function and the function value of the second loss function, perform gradient derivation based on the total function value, and reversely update a weight parameter of the first neural network, to complete one training on the first neural network. The first loss function indicates the amount of information carried in the fifth sequence data, and the second loss function indicates a similarity between the prediction result of the fourth sequence data and the correct result of the fourth sequence data. The first preset condition may be that a quantity of iterations reaches a preset quantity of times, or may be that a convergence condition of the first loss function and the second loss function is met.

In a possible implementation of the third aspect, before the inputting the fourth sequence data into a first neural network, the method further includes: The training device inputs the fourth sequence data into a third neural network, to obtain the prediction result of the fourth sequence data that is output by the third neural network; and trains the third neural network based on a third loss function until a second preset condition is met, to obtain the second neural network.

The third loss function indicates a similarity between the prediction result of the fourth sequence data and the correct result of the fourth sequence data, the second neural network is a trained third neural network, and a parameter of the second neural network is not updated in a training process of the first neural network.

In this implementation, before the first neural network is trained, the third neural network is first trained based on the third loss function, to obtain the mature third neural network (that is, the second neural network). In a process of training the first neural network, the weight parameter of the second neural network is not updated, to reduce a confusion degree of the training process of the first neural network, and improve efficiency of the training process of the first neural network. After a type of input data of the second neural network is fixed, stability of a type of output data of the first neural network can be ensured, so as to ensure controllability of the training process of the first neural network.

In a possible implementation of the third aspect, types of the second loss function and the third loss function are related to a task type of the third neural network, and the second loss function and the third loss function may be loss functions of a same type, or may be loss functions of different types. For example, if the task type of the third neural network is classification, types of the second loss function and the third loss function each may be a cross entropy loss function. For another example, if the task type of the third neural network is speech recognition, types of the second loss function and the third loss function each may be a first-order distance loss function, a second-order distance loss function, or the like.

For specific implementation steps, meanings of nouns in the third aspect and possible implementations of the third aspect of embodiments of this application, and beneficial effects brought by each possible implementation, refer to descriptions in possible implementations of the first aspect. Details are not described herein again.

According to a fourth aspect, an embodiment of this application provides a data processing apparatus, and the apparatus may be applied to the field of sequence data processing of artificial intelligence. The apparatus is applied to a first execution device, and the apparatus includes: an input module, a sending module, and a receiving module. The input module is configured to input first sequence data into a first neural network, to perform, by using the first neural network, deletion processing on information carried in the first sequence data, so as to obtain second sequence data, and an amount of information carried in the second sequence data is less than an amount of information carried in the first sequence data. The sending module is configured to send the second sequence data to a second execution device, and the second sequence data is used to indicate the second execution device to input the second sequence data into a second neural network, to generate a prediction result of the second sequence data by using the second neural network. The receiving module is configured to receive the prediction result of the second sequence data that is sent by the second execution device, and the prediction result of the second sequence data is considered as a prediction result of the first sequence data. The first neural network is obtained through training by using a first loss function and a second loss function, the first loss function indicates the amount of information carried in the second sequence data, and the second loss function indicates a similarity between the prediction result of the first sequence data and a correct result of the first sequence data.

For specific implementation steps in the fourth aspect and possible implementations of the fourth aspect of embodiments of this application and beneficial effects brought by each possible implementation, refer to descriptions in the possible implementations of the first aspect. Details are not described herein again.

According to a fifth aspect, an embodiment of this application provides a data processing apparatus, and the apparatus may be applied to the field of sequence data processing of artificial intelligence. The apparatus is applied to a second execution device, and the apparatus includes: a receiving module, an input module, and a sending module. The receiving module is configured to receive second sequence data sent by a first execution device, the second sequence data is obtained after the first execution device inputs first sequence data into a first neural network and performs, by using the first neural network, deletion processing on information carried in the first sequence data, and an amount of information carried in the second sequence data is less than an amount of information carried in the first sequence data. The input module is configured to input the second sequence data into a second neural network, to obtain a prediction result of the second sequence data that is output by the second neural network. The sending module is configured to send the prediction result of the second sequence data to the first execution device. The first neural network is obtained through training by using a first loss function and a second loss function, the first loss function indicates the amount of information carried in the second sequence data, and the second loss function indicates a similarity between a prediction result of the first sequence data and a correct result of the first sequence data.

For specific implementation steps of the fifth aspect and possible implementations of the fifth aspect of embodiments of this application and beneficial effects brought by each possible implementation, refer to descriptions in the possible implementations of the second aspect. Details are not described herein again.

According to a sixth aspect, an embodiment of this application provides a neural network training apparatus, and the apparatus may be used in the field of sequence data processing of artificial intelligence. The apparatus is applied to a training device, and the apparatus includes: an obtaining module, an input module, and a training module. The obtaining module is configured to obtain a training data set, where the training data set includes a plurality of pieces of fourth sequence data and a correct result of each piece of fourth sequence data. The input module is configured to input the fourth sequence data into a first neural network, to perform, by using the first neural network, deletion processing on information carried in the fourth sequence data, so as to obtain fifth sequence data that is output by the first neural network, and an amount of information carried in the fifth sequence data is less than an amount of information carried in the fourth sequence data. The input module is further configured to input the fifth sequence data into a second neural network, to obtain a prediction result of the fifth sequence data that is output by the second neural network, and the prediction result of the fifth sequence data is considered as a prediction result of the fourth sequence data. The training module is configured to train the first neural network based on a first loss function and a second loss function until a preset condition is met, the first loss function indicates the amount of information carried in the fifth sequence data, and the second loss function indicates a similarity between the prediction result of the fourth sequence data and the correct result of the fourth sequence data.

For specific implementation steps of the sixth aspect and possible implementations of the sixth aspect of embodiments of this application and beneficial effects brought by each possible implementation, refer to descriptions in the possible implementations of the third aspect. Details are not described herein again.

According to a seventh aspect, an embodiment of this application provides an execution device. The execution device may include a processor, the processor is coupled to a memory, the memory stores program instructions, and when the program instructions stored in the memory are executed by the processor, the data processing method in the first aspect or the second aspect may be implemented. For performing, by the processor, steps performed by the first execution device in the possible implementations of the first aspect or steps performed by the second execution device in the possible implementations of the second aspect, refer to the first aspect or the second aspect. Details are not described herein again.

According to an eighth aspect, an embodiment of this application provides a computer-readable storage medium. The computer-readable storage medium stores a computer program. When the computer program is run on a computer, the computer is enabled to perform the data processing method in the first aspect or the second aspect, or the computer is enabled to perform the neural network training method in the third aspect.

According to a ninth aspect, an embodiment of this application provides a circuit system. The circuit system includes a processing circuit, and the processing circuit is configured to perform the data processing method in the first aspect or the second aspect, or the processing circuit is configured to perform the neural network training method in the third aspect.

According to a tenth aspect, an embodiment of this application provides a computer program. When the computer program is run on a computer, the computer is enabled to perform the data processing method in the first aspect or the second aspect, or the computer is enabled to perform the neural network training method in the third aspect.

According to an eleventh aspect, an embodiment of this application provides a chip system. The chip system includes a processor, and the processor is configured to support a first execution device, a second execution device, or a training device in implementing functions in the foregoing aspects, for example, sending or processing data and/or information in the foregoing methods. In a possible design, the chip system further includes a memory. The memory is configured to store program instructions and data that are necessary for a server or a communication device. The chip system may include a chip, or may include a chip and another discrete device.

**BRIEF DESCRIPTION OF DRAWINGS**

FIG. 1 is a schematic diagram of a structure of an artificial intelligence main framework according to an embodiment of this application;

FIG. 2 is a diagram of a system architecture of a data processing system according to an embodiment of this application;

FIG. 3 is a schematic flowchart of a neural network training method according to an embodiment of this application;

FIG. 4 is a schematic diagram of fourth sequence data and fifth sequence data in a data processing method according to an embodiment of this application;

FIG. 5 is another schematic diagram of fourth sequence data and fifth sequence data in a data processing method according to an embodiment of this application;

FIG. 6 is a schematic diagram of a network structure of a first neural network in a data processing method according to an embodiment of this application;

FIG. 7 is another schematic flowchart of a neural network training method according to an embodiment of this application;

FIG. 8 is a schematic flowchart of a data processing method according to an embodiment of this application;

FIG. 9 is a schematic diagram of a structure of a data processing apparatus according to an embodiment of this application;

FIG. 10 is a schematic diagram of another structure of a data processing apparatus according to an embodiment of this application;
FIG. 11 is a schematic diagram of a structure of a neural network training apparatus according to an embodiment of this application;
FIG. 12 is a schematic diagram of a structure of an execution device according to an embodiment of this application;
FIG. 13 is a schematic diagram of a structure of a server according to an embodiment of this application; and
FIG. 14 is a schematic diagram of a structure of a chip according to an embodiment of this application.

## DESCRIPTION OF EMBODIMENTS

Embodiments of this application provide a data processing method, a neural network training method, and a related device, to reduce an amount of information sent to a server, so as to reduce data in a risky state, and improve security of user data. A first loss function indicates an amount of information carried in second sequence data, and a second loss function indicates a similarity between a prediction result and a correct result, that is, impact caused by reducing the amount of information on accuracy of the prediction result is reduced as much as possible.

In a specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, terms "include", "have" and any other variants thereof mean to cover the non-exclusive inclusion, so that a process, method, system, product, or device that includes a series of units is not necessarily limited to those units, but may include other units not expressly listed or inherent to such a process, method, product, or device.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

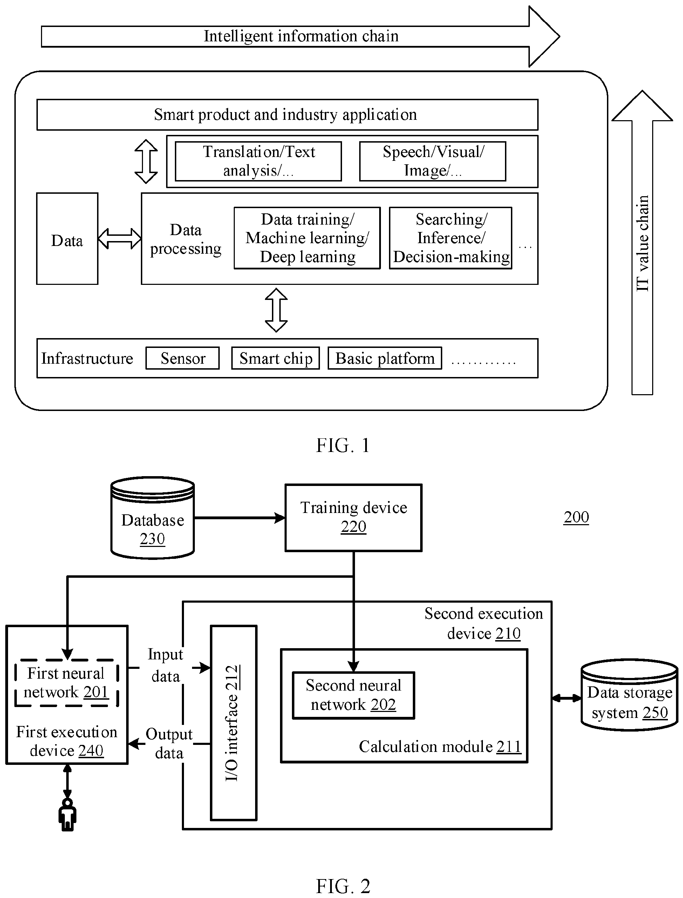

An overall working procedure of an artificial intelligence system is first described. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

Infrastructure provides computing capability support for the artificial intelligence system, implements communication with the external world, and implements support by using a basic platform. A sensor communicates with the outside. The computing capability is provided by a smart chip. For example, the smart chip includes a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), and a field-programmable gate array (field-programmable gate array, FPGA). The basic platform includes platform assurance and support related to a distributed computing framework, a network, and the like, and may include cloud storage and computing, an interconnection network, and the like. For example, the sensor communicates with the outside to obtain data, and the data is provided to the smart chip in a distributed computing system provided by the basic platform for computing.

(2) Data

Data at an upper layer of infrastructure indicates a source of data in the field of artificial intelligence. The data relates to a graph, an image, speech, and text, further relates to Internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process in which a decision is made after intelligent information is inferred, and usually provides functions such as classification, ranking, and prediction.

(4) General capability

After the data processing mentioned above is performed on data, some general capabilities may be further formed based on a data processing result, for example, may be an algorithm or a general-purpose system, such as image classification, personalized image management, personalized battery charging management, text analysis, computer vision processing, and speech recognition.

(5) Smart product and industry application

Smart products and industry applications are products and applications of an artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.

Embodiments of this application may be applied to various fields of artificial intelligence, and may be specifically applied to various scenarios in which sequence data needs to be processed. The sequence data is an ordered set including several elements, and information carried in the sequence data may be information in image data, information in text data, or information in audio data. For example, the sequence data carries information of a to-be-classified image. For another example, the sequence data carries description information of a user, and the description information of the user may include information such as an age, a gender, and a salary level of the user. For still another example, the sequence data carries to-be-recognized speech information. This is not exhaustive herein.

Based on the foregoing application scenario, an embodiment of this application provides a data processing method. For ease of understanding of this solution, in this embodiment of this application, a data processing system provided in an embodiment of this application is first described with reference to FIG. 2. FIG. 2 is a diagram of a system architecture of a data processing system according to an embodiment of this application. In FIG. 2, a data processing system 200 includes a second execution device 210, a training device 220, a database 230, a first execution device 240, and a data storage system 250. The second execution device 210 includes a calculation module 211 and an input/output (in/out, I/O) interface 212.

Specifically, in a training phase, the database 230 is configured to store a training data set, where the training data set includes a plurality of pieces of fourth sequence data and a correct result of each piece of fourth sequence data. The training device 220 generates a first neural network 201 used to perform deletion processing on information carried in the fourth sequence data and a second neural network 202 used to generate a prediction result of the fourth sequence data. The second neural network 202 is a trained neural network. The training device 220 performs iterative training on the first neural network 201 by using the training data set in the database 230, to obtain a mature first neural network 201. The training device 220 configures the mature first neural network 201 in the first execution device 240, and configures the second neural network 202 in the second execution device 210.

In an inference phase, after obtaining to-be-processed first sequence data, the first execution device 240 inputs the first sequence data into the mature first neural network 201, performs, by using the first neural network 201, deletion processing on an amount of information carried in the first sequence data, to obtain second sequence data, and sends the second sequence data to the second execution device 210 by using the I/O interface 212. An amount of information carried in the second sequence data is less than the amount of information carried in the first sequence data.

The first execution device 240 may invoke data, code, and the like in the data storage system 250, or may store data, an instruction, and the like in the data storage system 250. The data storage system 250 may be disposed in the second execution device 210, or the data storage system 250 may be an external memory relative to the second execution device 210. The calculation module 211 inputs the second sequence data into the second neural network 202, to obtain a prediction result of the second sequence data that is output by the second neural network 202, and sends the prediction result of the second sequence data to the first execution device 240. The first execution device 240 considers the prediction result of the second prediction data as a prediction result of the first sequence data.

In this embodiment of this application, the first execution device 240 may be represented as a terminal device integrated with a client, for example, a notebook computer, an intelligent terminal, a wearable device, a smart home appliance, an intelligent robot, or a monitoring device. Details are not exhaustive herein. The second execution device 210 may be represented as a server corresponding to the foregoing client, or the second execution device 210 may be represented as a terminal device with strong computing power. The first electronic device 240 is communicatively connected to the second electronic device 210 by using a wireless network or a wired network.

The training device 220 may be specifically represented as a server. In some embodiments of this application, for example, in FIG. 2, the training device 220 and the second execution device 210 each are independent devices. The training device 220 may send the mature first neural network 201 to the first execution device 240 and send the second neural network 202 to the second execution device 210 by using the wireless network or the wired network; or configure the first neural network 201 in the first execution device 240 and configure the second neural network 202 in the second execution device 210 by using a mobile storage medium. Configuration manners are not exhaustive herein. However, FIG. 2 is merely a schematic diagram of an architecture of a data processing system according to an embodiment of this invention, and a location relationship between devices, components, modules, and the like shown in the figure does not constitute any limitation. In some other embodiments of this application, the training device 220 and the second execution device 210 may alternatively be integrated into a same device, that is, devices of the training device 220 and the second execution device 210 are specifically represented as a same device.

In the inference phase, a large quantity of computer resources are consumed in a step of generating the prediction result by using the second neural network 202. The second neural network 202 is disposed in the second execution device 210. The second execution device 210 and the first execution device 240 (that is, the terminal device integrated with the client) are devices independent of each other, that is, a large quantity of computer computing is separated from the client, to avoid excessive consumption of computer resources of the client and improve user experience. In addition, the client performs, by using the mature first neural network 201, deletion processing on the information carried in the first sequence data, so that an amount of information sent to the server can be reduced, to reduce data in a risky state, so as to improve security of user data. The first neural network is obtained through training by using the first loss function and the second loss function. A first loss function indicates the amount of information carried in the second sequence data, and a second loss function indicates a similarity between the prediction result and the correct result. Therefore, impact caused by reducing the amount of information sent to the server on accuracy of the prediction result is reduced as much as possible while the amount of information sent to the server is reduced. Because the method affects both the training phase and the inference phase, and implementation procedures of the training phase and the inference phase are different, the following separately describes specific implementation procedures of the foregoing two phases.

1. Training phase

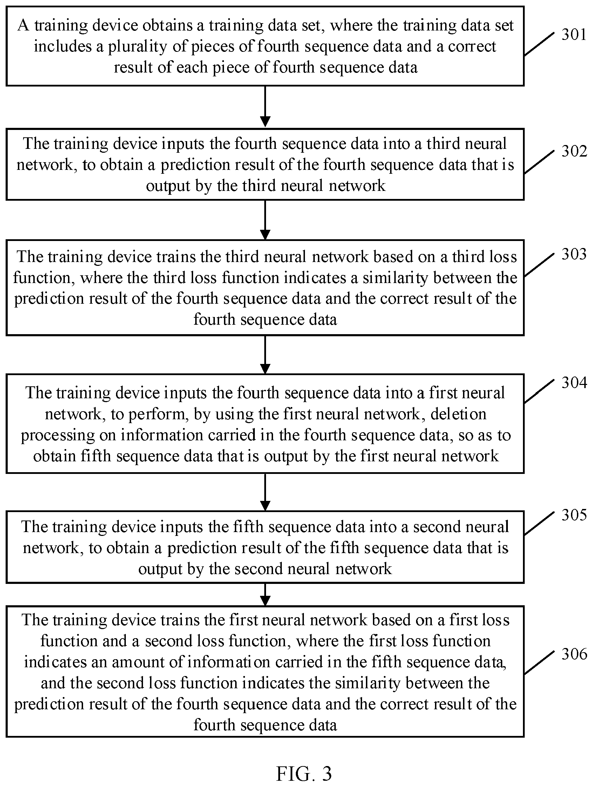

In this embodiment of this application, FIG. 3 is a schematic flowchart of a neural network training method according to an embodiment of this application. The neural network training method provided in this embodiment of this application may include the following steps.

301: A training device obtains a training data set, where the training data set includes a plurality of pieces of fourth sequence data and a correct result of each piece of fourth sequence data.

In this embodiment of this application, the training data set is configured on the training device, and the training data set includes the plurality of pieces of fourth sequence data and the correct result of each piece of fourth sequence data. The fourth sequence data may be image data, text data, or audio data. Further, if the fourth sequence data carries information that is not image data, the fourth sequence data may be represented in a form of a vector. If the fourth sequence data carries image data, the fourth sequence data may be represented as an M-dimensional tensor, where a value of M is an integer greater than or equal to 2.

In an example, if the fourth sequence data carries information in image data, and a task objective of a third neural network is image classification, the training data set may include a plurality of images and a correct label of each image. In another example, if the fourth sequence data carries text data, and a task objective of the third neural network is text translation, the training data set may include a plurality of to-be-translated texts and a correct translation result of each to-be-translated text. In still another example, if the fourth sequence data carries audio data, and a task objective of the third neural network is speech recognition, the training data set may include a plurality of pieces of speech and a recognition result of each piece of speech. Details are not exhaustive herein.

302: The training device inputs the fourth sequence data into the third neural network, to obtain a prediction result of the fourth sequence data that is output by the third neural network.

In this embodiment of this application, after obtaining the fourth sequence data from the training data set, the training device inputs the fourth sequence data into the third neural network, to obtain the prediction result of the fourth sequence data that is output by the third neural network. If the fourth sequence data includes a time sequence relationship, the third neural network may be a recurrent neural network. If the fourth sequence data is image data that includes no time sequence relationship, the third neural network may be a convolutional neural network. If the fourth sequence data is non-image data that includes no time sequence relationship, the third neural network may be a fully-connected neural network. For example, if the fourth sequence data is image data, the third neural network may be represented as a residual neural network Resnet18 or another convolutional neural network. If the fourth sequence data is audio data or text data, the third neural network may be specifically represented as another neural network. Details are not exhaustive herein.

In another example, if the task objective of the third neural network is speech recognition, the training device may first divide the audio data by time (for example, one group every 20 milliseconds) to obtain a plurality of slices, then obtain spectral vectors of the slices through Fourier transform, and input a spectral vector (an example of the fourth sequence data) corresponding to the audio data to a recurrent neural network (that is, an example of the third neural network) for speech recognition, to obtain a recognition result (that is, an example of the prediction result) that is output by the recurrent neural network.

In another example, if the task objective of the third neural network is text translation, the training device may represent each word in a to-be-translated text in a form of a digital code, and input a digital code (an example of the fourth sequence data) corresponding to the entire to-be-translated text to a recurrent neural network (that is, an example of the third neural network) for text translation, to obtain a translation result (that is, an example of the prediction result) that is output by the recurrent neural network.

In another example, if the task objective of the third neural network is article classification, the training device may first count a quantity of occurrences of each word in a to-be-classified article by using a bag-of-word model, form a vector (an example of the fourth sequence data) by using the quantity of occurrences, and input the vector into a fully-connected network (that is, an example of the third neural network), to generate a prediction classification result (that is, an example of the prediction result). It should be understood that specific representation forms of the third neural network and the prediction result are related to a task type of the third neural network. The foregoing examples are merely for ease of understanding of this solution, and are not intended to limit this solution.

303: The training device trains the third neural network based on a third loss function, where the third loss function indicates a similarity between the prediction result of the fourth sequence data and the correct result of the fourth sequence data.

In this embodiment of this application, after obtaining the prediction result of the fourth sequence data that is output by the third neural network, the training device generates a function value of the third loss function based on the prediction result of the fourth sequence data and the prediction result of the fourth sequence data, performs gradient derivation based on the function value of the third loss function, and reversely updates a parameter value of a weight parameter of the third neural network, to complete one training on the third neural network. The training device repeatedly performs step 302 and step 303, to perform iterative training on the third neural network until a second preset condition is met, so as to obtain a second neural network. The second neural network is a trained third neural network, that is, the second neural network is a mature neural network. A weight parameter of the second neural network is not updated in a subsequent process in which the training device trains a first neural network. The second preset condition may be that a quantity of times of iterative training meets a preset quantity threshold, or may be that a convergence condition of the third loss function is met.

The third loss function indicates the similarity between the prediction result of the fourth sequence data and the correct result of the fourth sequence data, and a training objective is to increase the similarity between the prediction result of the fourth sequence data and the correct result of the fourth sequence data. A type of the third loss function is related to the task type of the third neural network. For example, if the task type of the third neural network is classification, the third loss function may be a cross entropy loss function. For another example, if the task type of the third neural network is speech recognition, the third loss function may be a first-order distance loss function, a second-order distance loss function, or the like. A specific type of the third loss function is not exhaustive herein.

In this embodiment of this application, before the first neural network is trained, the third neural network is first trained based on the third loss function, to obtain the mature third neural network (that is, the second neural network). In a process of training the first neural network, the weight parameter of the second neural network is not updated, to reduce a confusion degree of the training process of the first neural network, and improve efficiency of the training process of the first neural network. After a type of input data of the second neural network is fixed, stability of a type of output data of the first neural network can be ensured, so as to ensure controllability of the training process of the first neural network.

304: The training device inputs the fourth sequence data into the first neural network, to perform, by using the first neural network, deletion processing on information carried in the fourth sequence data, so as to obtain fifth sequence data that is output by the first neural network.

In this embodiment of this application, the training device obtains the fourth sequence data and the correct result of the fourth sequence data from the training data set again, and inputs the fourth sequence data into the first neural network, to perform, by using the first neural network, deletion processing on the information carried in the fourth sequence data, so as to obtain the fifth sequence data that is output by the first neural network. It should be noted that the fourth sequence data is a general concept, and is sequence data included in the training data set configured on the training device. The fourth sequence data used when iterative training is performed on the third neural network by performing step 302 and step 303, and the fourth sequence data used when training is performed on the first neural network by performing step 304 to step 306 may be same data in the training data set, or may be different data in the training data set.

An amount of information carried in the fifth sequence data is less than an amount of information carried in the fourth sequence data. Because the fifth sequence data carries a smaller amount of information, the fifth sequence data may also be considered as sequence data obtained after privacy processing is performed on the fourth sequence data. If the fourth sequence data and the fifth sequence data each are image data, the amount of information carried in each of the fourth sequence data and the fifth sequence data may be measured by using image entropy. The image entropy is a definition widely used in the image processing field, and may be used to measure an amount of information included in an image. Further, image entropy of a gray-scale image may be directly calculated by using a formula, and image entropy of an entire color image may be obtained by summing up image entropy of all channels of the color image. To further understand this solution, the following discloses an example of the formula for calculating the image entropy:

$$H_I = -\sum_{i=0}^{255} p_i \log_{p_i} \qquad \text{Formula (1)}$$

Herein, I represents an image of a channel/a gray-scale image, i represents a possible value of a single pixel in the image I, the channel is an integer ranging from 0 to 255, $p_i = \frac{n_i}{N}$ , $p_i$ represents a probability of a pixel whose pixel value is i in the image I, $n_i$ represents a quantity of pixels whose pixel values each are i in the image I, and N represents a total quantity of pixels in the image I. It should be understood that the example in Formula (1) is merely for ease of better understanding of a concept of the amount of information carried in the fourth sequence data. When the fourth sequence data and the fifth sequence data are text data or audio data, the amount of information carried in the fourth sequence data or the fifth sequence data may be measured in another manner. Details are not described herein.

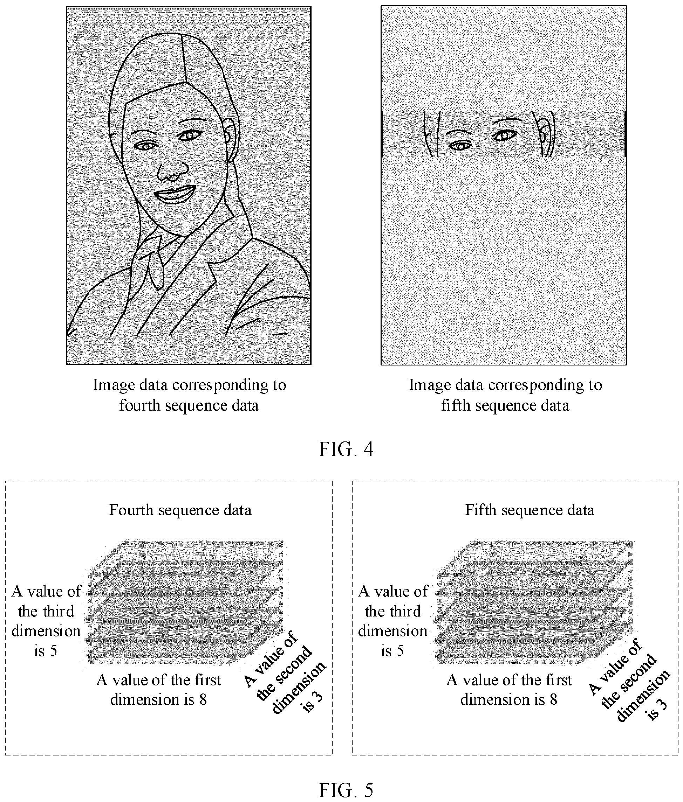

To understand this solution more intuitively, refer to FIG. 4. FIG. 4 is a schematic diagram of the fourth sequence data and the fifth sequence data in the data processing method according to an embodiment of this application. In FIG. 4, for example, the fourth sequence data and the fifth sequence data each carry information of image data, and a task objective of the second neural network is to divide an image into two types: an image with glasses and an image without glasses. FIG. 4 includes a left sub-schematic diagram and a right sub-schematic diagram. The left sub-schematic diagram in FIG. 4 represents the information of the image data carried in the fourth sequence data, and the right sub-schematic diagram in FIG. 4 represents the information of the image data carried in the fifth sequence data. It can be learned by comparing the left sub-schematic diagram in FIG. 4 with the right sub-schematic diagram in FIG. 4 that, in the right sub-schematic diagram in FIG. 4, only an eye part in the left sub-schematic diagram in FIG. 4 is retained, and a remaining part is presented as a gray-scale image. In other words, the fifth sequence data carries less information than the fourth sequence data, but necessary information required for generating a prediction result by the second neural network is retained. It should be understood that the example in FIG. 4 is merely for ease of understanding of a concept that the amount of information carried in the fifth sequence data is less than the amount of information carried in the fourth sequence data, and is not intended to limit this solution.

Optionally, a shape of the output data of the first neural network is the same as a shape of the input data of the second neural network. In other words, the fifth sequence data that is output by the first neural network can be directly input into the second neural network without additional processing, to improve efficiency of a data processing process. For example, if the fourth sequence data and the fifth sequence data each are image data. That the two pieces of image data have a same shape means that the two pieces of image data have a same size and same channel data. For another example, if the fourth sequence data and the fifth sequence data each are non-image data, the fourth sequence data and the fifth sequence data may be represented as vectors. That the two vectors have a same shape means that the two vectors have a same length, that is, the two vectors include a same quantity of elements.

Further, optionally, a shape of input data of the first neural network is the same as the shape of the output data of the first neural network, that is, a shape of the fourth sequence data is the same as a shape of the fifth sequence data. In this embodiment of this application, before the first neural network is added, to directly input the fourth sequence data into the second neural network to generate the prediction result of the fourth sequence data, the shape of the input data of the first neural network is the same as the shape of the output data of the first neural network, that is, the shape of the sequence data is not changed after the sequence data is processed by the first neural network. In other words, after the first neural network is added and before the first neural network is set, the shape of the input data does not need to change, that is, a previous input habit of the user does not need to change, and there is no need to add another processing layer between the first neural network and the second neural network. This reduces computer resources and improves user experience.

The fourth sequence data and the fifth sequence data each are a tensor, and that a shape of the fourth sequence data is the same as a shape of the fifth sequence data means that the fourth sequence data and the fifth sequence data each are an N-dimensional tensor, and a size of a first dimension in N dimensions of the fourth sequence data is the same as a size of a second dimension in N dimensions of the fifth sequence data, where N is an integer greater than or equal to 1, the first dimension is any dimension in the N dimensions of the fourth sequence data, and the second dimension is a dimension that is in the N dimensions of the fifth sequence data and that is the same as the first dimension. When a value of N is 1, that is, both the fourth sequence data and the fifth sequence data are vectors, for a meaning that the two vectors have a same shape, refer to the foregoing descriptions.

To understand this solution more intuitively, refer to FIG. 5. FIG. 5 is a schematic diagram of the fourth sequence data and the fifth sequence data in the data processing method according to an embodiment of this application. In FIG. 5, for example, a value of N is 3. In FIG. 5, values of three dimensions in the fourth sequence data are respectively 8, 3, and 5, and values of three dimensions in the fifth sequence data are also respectively 8, 3, and 5. A difference lies in that values of elements in the fourth sequence data are different from values of elements in the fifth sequence data. It should be understood that the example in FIG. 5 is merely for ease of understanding of a concept that two pieces of sequence data have a same shape, and is not intended to limit this solution.

A type of the first neural network is related to a type of the fourth sequence data. If the fourth sequence data includes a time sequence relationship, the second neural network may be a recurrent neural network. If the fourth sequence data is image data that includes no time sequence relationship, the second neural network may be a convolutional neural network. If the fourth sequence data is non-image data that includes no time sequence relationship, the second neural network may be a fully-connected neural network. For example, when the fourth sequence data is image data, the first neural network may be specifically represented as a Unet model, an auto-incoder (auto-incoder) model, or another neural network. In this embodiment of this application, the fourth sequence data may carry information of image data, audio data, or text data, and a plurality of representation forms of the first neural network are also disclosed, so that application scenarios of this solution are extended.

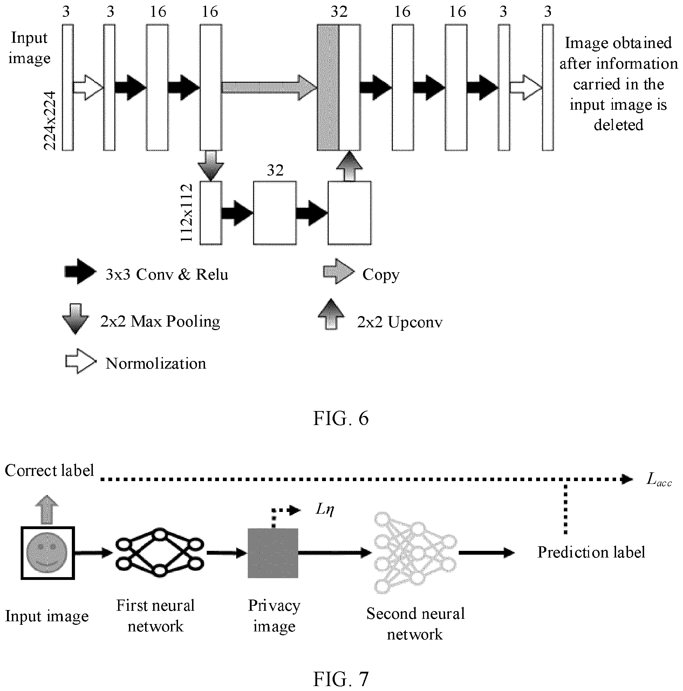

To understand this solution more intuitively, refer to FIG. 6. FIG. 6 is a schematic diagram of a network structure of the first neural network in the data processing method according to an embodiment of this application. In FIG. 6, for example, both the fourth sequence data and the fifth sequence data are represented as images, and the first neural network is specifically a Unet model. The training device inputs an image whose size is 224x224 and whose quantity of channels is 3 into the Unet model. After performing processing, the first neural network outputs an image obtained after deletion processing is performed on information carried in the input image. The image is also an image whose size is 224x224 and whose quantity of channels is 3. The network structure and the processing process of the first neural network are shown in FIG. 6. Details are not described herein again. It should be understood that the example in FIG. 6 is merely for ease of understanding of the first neural network, and is not intended to limit this solution.

305: The training device inputs the fifth sequence data into the second neural network, to obtain a prediction result of the fifth sequence data that is output by the second neural network.

In this embodiment of this application, the training device inputs the fifth sequence data into the second neural network, to obtain the prediction result of the fifth sequence data that is output by the second neural network. The prediction result of the fifth sequence data may be considered as the prediction result of the fourth sequence data. The task objective of the second neural network is different from a task objective of the first neural network. The task objective of the first neural network is to delete an amount of information carried in sequence data, that is, preprocess the sequence data. The task objective of the second neural network is to generate a prediction result of sequence data. The second neural network is the trained third neural network, a type of the second neural network is the same as a type of the third neural network in step 302, and a type of the prediction result of the fifth sequence data is the same as a type of the prediction result of the fourth sequence data in step 302. For details, refer to the foregoing descriptions for understanding. Details are not described herein again.

306: The training device trains the first neural network based on a first loss function and a second loss function, where the first loss function indicates the amount of information carried in the fifth sequence data, and the second loss function indicates the similarity between the prediction result of the fourth sequence data and the correct result of the fourth sequence data.

In this embodiment of this application, after obtaining the fifth sequence data and the prediction result of the fifth sequence data (that is, the prediction result of the fourth sequence data), the training device may generate a function value of the first loss function and a function value of the second loss function, calculate a total function value based on the function value of the first loss function and the function value of the second loss function, perform gradient derivation based on the total function value, and reversely update a weight parameter of the first neural network, to complete one training on the first neural network. The training device repeatedly performs step 304 to step 306, to perform iterative training on the first neural network until a first preset condition is met, to obtain a mature first neural network. The first preset condition may be that a quantity of iterations in step 304 to step 306 reaches a preset quantity of times, or may be that a convergence condition of the first loss function and the second loss function is met.

Specifically, the training device may perform weighted summation on the function value of the first loss function and the function value of the second loss function, to calculate the total function value; or the training device may directly add the function value of the first loss function and the function value of the second loss function, to calculate the total function value; or the training device may calculate the total function value in another manner. This is not limited herein. The following discloses an example of a formula for calculating the total function value by the training device based on the first loss function and the second loss function:

$$L = \lambda L\eta + (1 - \lambda)\, Lacc \quad \text{Formula (2)}$$

Herein, $L$ represents the total loss function, $L\eta$ represents the first loss function, $Lace$ represents the second loss function, $\lambda$ is a hyperparameter, and a value range of $\lambda$ is greater than 0 and less than 1. For example, a value of $\lambda$ may be 0.9, 0.8, 0.7, 0.6, 0.5, 0.4, 0.3, 0.2, or 0.1, and this is not exhaustive herein. The value of $\lambda$ is related to a training objective. If the training objective focuses on protecting security of user information, the value of $\lambda$ is relatively large. If the training objective focuses on ensuring accuracy of a prediction result, the value of $\lambda$ is relatively small.

The second loss function indicates the similarity between the prediction result of the fourth sequence data (that is, the prediction result of the fifth sequence data) and the correct result of the fourth sequence data. The training objective is to reduce the amount of information carried in the fifth sequence data and increase the similarity between the prediction result of the fifth sequence data (that is, the prediction result of the fourth sequence data) and the correct result of the fourth sequence data. Similar to the third loss function, a type of the second loss function is related to the type of the third neural network (or the second neural network). The second loss function and the third loss function may be loss functions of a same type, or may be loss functions of different types. For understanding of the second loss function, refer to the foregoing descriptions of the third loss function. Details are not described herein again.

The first loss function indicates the amount of information carried in the fifth sequence data.

In one case, the first loss function indicates a distance between the fifth sequence data and third sequence data. The fifth sequence data and the third sequence data each include at least one element, and a shape of the third sequence data is the same as the shape of the fifth sequence data. A value range of one third element in the plurality of elements included in the fifth sequence data is a first value range, a value range of one second element included in the third sequence data is a second value range, a location of the third element in the fifth sequence data is consistent with a location of the second element in the third sequence data, and the second value range is located in a middle area of the first value range. For example, if the fifth sequence data is image data, and the first value range is 0 to 255, the second value range may be 100 to 150. For another example, if the fifth sequence data is audio data, and the first value range is -5 to 5, the second value range may be -1 to 1. It should be understood that the example herein is merely for ease of understanding of a concept of the middle area, and is not intended to limit this solution.

Further, if value ranges of different elements in the plurality of elements included in the fifth sequence data are all the same, values of different elements in the plurality of elements included in the third sequence data are all the same. For example, if the fifth sequence data carries information of image data, and a value range (that is, the first value range) of each element in the fifth sequence data is 0 to 255, the second value range may be 100 to 150, and values of all the elements included in the third sequence data may be 123, 125, 127, 128, 129, 131, and the like, provided that the values of all the elements in the third sequence data are the same, and a value of an element in the third sequence data is located in the second value range. It can be learned with reference to the foregoing descriptions that, that the values of all the elements in the third sequence data are the same means that pixel values of different pixels in the image corresponding to the third sequence data are the same. Therefore, entropy of the image corresponding to the third sequence data is very low.

If value ranges of different elements in the plurality of elements included in the fifth sequence data are different, values of different elements in the plurality of elements included in the third sequence data may be the same. For example, the information carried in the fifth sequence data is description information reflecting a user, and the description information of the user includes three characteristics: an age, a height, and a weight of the user. Information carried in the third sequence data may be an average value of a plurality of users in each characteristic, that is, the information carried in the third sequence data includes an average value of ages of the plurality of users, an average value of heights of the plurality of users, and an average value of weights of the plurality of users. In this case, values of different elements in the plurality of elements included in the third sequence data may be different, but the second value range of the second element in the third sequence data is located in the middle area of the first value range of the third element in the fifth sequence.

In this embodiment of this application, the value range of the third element in the fifth sequence data is the first value range. A larger value range of each element indicates more possibilities of value combinations of the plurality of elements, that is, the sequence data may have larger entropy and therefore carry a larger amount of data. The value range of the second element in the third sequence data is the second value range, and the second value range is located in the middle area of the first value range. Therefore, the third sequence data carries a smaller amount of data, and the training objective is to increase the similarity between the fifth sequence data and the third sequence data, so as to reduce the amount of information carried in the fifth sequence data in an iterative training process. In addition, increasing the similarity between the fifth sequence data and the third sequence data can maintain a statistical feature of the sequence data processed by the first neural network, so as to reduce impact on accuracy of the prediction result.

Further, the first loss function may be a first-order distance, a second-order distance, a cosine distance, a Euclidean distance, a Mahalanobis distance, or another type of distance between the fifth sequence data and the third sequence data, and this is not exhaustive herein. Optionally, the value of the second element is a median value of the first value range. For example, the third sequence data may carry information of a gray-scale image whose pixel values of all pixels each are 128. For another example, the third sequence data may carry information of text data full of spaces. Details are not exhaustive herein.

In this embodiment of this application, the first loss function is the first-order distance between the fifth sequence data and the third sequence data. This can ensure that the first loss function can accurately reflect a difference between the fifth sequence data and the third sequence data, so as to improve security of user information.

To understand this solution more intuitively, the following discloses an example of the first loss function:

$$L\eta = |H - H_{ref}|^1 \quad \text{Formula (3)}$$

Herein, $L\eta$ represents the first loss function, $H$ represents the fifth sequence data, $H_{ref}$ represents the third sequence data, and $|H - H_{ref}|^1$ represents the first-order distance between $H$ and $H_{ref}$. It should be understood that Formula (3) is merely an example, and is not intended to limit this solution.

To understand this solution more intuitively, refer to FIG. 7. FIG. 7 is a schematic flowchart of a neural network training method according to an embodiment of this application. In FIG. 7, for example, the fourth sequence data and the fifth sequence data each carry information of image data. The training device inputs an image (that is, an example of the information carried in the fourth sequence data) into the first neural network, and deletes, by using the first neural network, information carried in the input image, to obtain a privacy image (that is, an example of the information carried in the fifth sequence data) that is output by the first neural network. The privacy image is an image obtained after deletion processing is performed on the information carried in the input image. The training device inputs the privacy image into the second neural network, to obtain a prediction label that is output by the second neural network. The training device generates the function value of the first loss function $L\eta$ based on the privacy image, generates the function value of the second loss function *Lacc* based on the prediction label that is output by the second neural network and a correct label of the input image, and further reversely updates the weight parameter of the first neural network based on the function value of the first loss function and the function value of the second loss function, to complete one training on the first neural network. The second neural network is a mature neural network, and the weight parameter of the second neural network is not updated in a process of training the first neural network. It should be understood that the example in FIG. 7 is merely for ease of understanding of the first neural network, and is not intended to limit this solution.

In this embodiment of this application, after to-be-processed first sequence data is obtained, deletion processing is first performed, by using the first neural network, on information carried in the first sequence data, to obtain the second sequence data, and then the second sequence data is sent to the server, so as to generate a prediction result by using the second neural network on the server, and receive a processing result sent by the server. In the foregoing manner, an amount of information sent to the server can be reduced, to reduce data in a risky state, so as to improve security of user data. In addition, the first neural network is obtained through training by using the first loss function and the second loss function, the first loss function indicates the amount of information carried in the second sequence data, and the second loss function indicates the similarity between the prediction result and the correct result. Therefore, impact caused by reducing the amount of information sent to the server on accuracy of the prediction result is reduced as much as possible while the amount of information sent to the server is reduced.

2. Inference Phase

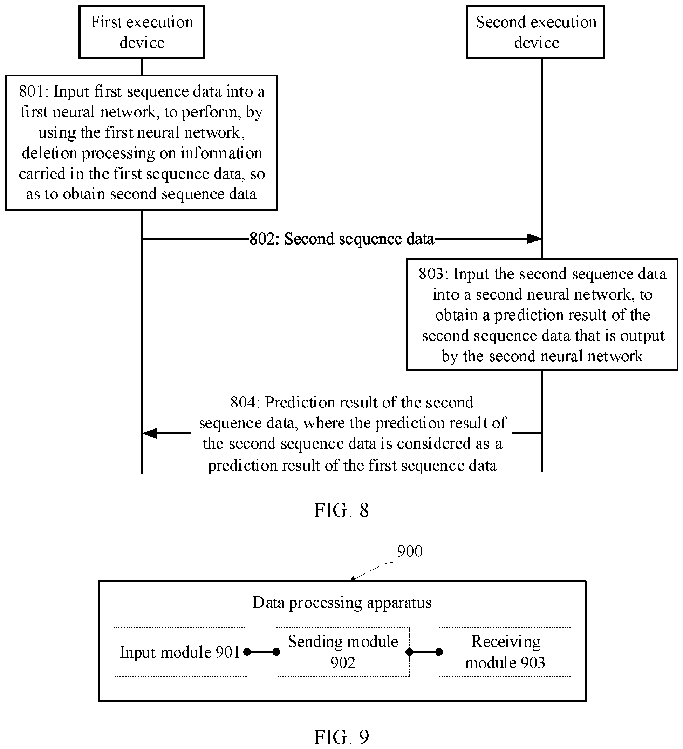

In this embodiment of this application, FIG. 8 is a schematic flowchart of a data processing method according to an embodiment of this application. The data processing method provided in this embodiment of this application may include the following steps.

801: The first execution device inputs the first sequence data into the first neural network, to perform, by using the first neural network, deletion processing on the information carried in the first sequence data, so as to obtain the second sequence data.

In this embodiment of this application, for a specific implementation in which the first execution device performs step 801, refer to a similar specific implementation of step 304 in the embodiment corresponding to FIG. 3. For details, refer to the foregoing descriptions. A concept of the first sequence data is similar to a concept of the fourth sequence data, a concept of the second sequence data is similar to a concept of fifth sequence data, and the amount of information carried in the second sequence data is less than the amount of information carried in the first sequence data. For understanding of concepts of the first sequence data and the second sequence data, refer to the foregoing descriptions. Details are not described herein again.

802: The first execution device sends the second sequence data to the second execution device.

In this embodiment of this application, the first execution device and the second execution device are devices independent of each other. After generating the second sequence data, the first execution device sends the second sequence data to the second execution device by using a wireless network or a wired network. Correspondingly, the second execution device receives the second sequence data sent by the first execution device. The second sequence data is used to indicate the second execution device to input the second sequence data into the second neural network, to generate the prediction result of the second sequence data by using the second neural network.

803: The second execution device inputs the second sequence data into the second neural network, to obtain the prediction result of the second sequence data that is output by the second neural network.

In this embodiment of this application, for a specific implementation in which the first execution device performs step 803, refer to a similar specific implementation of step 305 in the embodiment corresponding to FIG. 3. For details, refer to the foregoing descriptions.

804: The second execution device sends the prediction result of the second sequence data to the first execution device, and the prediction result of the second sequence data is considered as the prediction result of the first sequence data.

In this embodiment of this application, after generating the prediction result of the second sequence data, the second execution device sends the prediction result of the second sequence data to the first execution device. Correspondingly, the first execution device receives the prediction result of the second sequence data, and the prediction result of the second sequence data is considered as the prediction result of the first sequence data. The first neural network is obtained through training by using the first loss function and the second loss function, the first loss function indicates the amount of information carried in the second sequence data, and the second loss function indicates a similarity between the prediction result of the first sequence data and a correct result of the first sequence data.

To more intuitively understand beneficial effects brought by embodiments of this application, the following further describes the beneficial effects brought by embodiments of this application by using Table 1.

**Table 1**

| Technical solution | Processing duration |
| --- | --- |
| Model Segmentation | The client increases by 7 seconds. |
| This application | The client increases by 0.2 second. |

In the foregoing table, that the sequence data carries information of image data whose size is 224x224 is used as an example. In the model segmentation manner, feature extraction is performed on original sequence data on the client (that is, the first execution device), to obtain characteristic information of the original sequence data, and then the characteristic information of the original sequence data is sent to the server (that is, the second execution device). The server generates the prediction result of the sequence data. The server may mine privacy information of a user based on the characteristic information, or even restore the original sequence data. Security of this manner is lower than security of the solution provided in this embodiment of this application, and processing duration of the client is increased. In addition, accuracy of the prediction result may slightly reduce due to using the solution provided in this embodiment of this application, and a reduction degree is within 5%.

Based on embodiments corresponding to FIG. 1 to FIG. 8, the following further provides a related device used to implement the solution, to better implement the solution in embodiments of this application. Specifically, refer to FIG. 9. FIG. 9 is a schematic diagram of a structure of a data processing apparatus according to an embodiment of this application. A data processing apparatus 900 is applied to a first execution device, and may include an input module 901, a sending module 902, and a receiving module 903. The input module 901 is configured to input first sequence data into a first neural network, to perform, by using the first neural network, deletion processing on information carried in the first sequence data, so as to obtain second sequence data. An amount of information carried in the second sequence data is less than an amount of information carried in the first sequence data. The sending module 902 is configured to send the second sequence data to a second execution device, and the second sequence data is used to indicate the second execution device to input the second sequence data into a second neural network, to generate a prediction result of the second sequence data by using the second neural network. The receiving module 903 is configured to receive the prediction result of the second sequence data that is sent by the second execution device, and the prediction result of the second sequence data is considered as a prediction result of the first sequence data. The first neural network is obtained through training by using a first loss function and a second loss function, the first loss function indicates the amount of information carried in the second sequence data, and the second loss function indicates a similarity between the prediction result of the first sequence data and a correct result of the first sequence data.

In a possible design, the first loss function indicates a distance between the second sequence data and third sequence data. The second sequence data and the third sequence data each include at least one element, a value range of one first element included in the second sequence data is a first value range, a value range of one second element included in the third sequence data is a second value range, a location of the second element in the second sequence data is consistent with a location of the first element in the first sequence data, and the second value range is located in a middle area of the first value range.

In a possible design, the first loss function is a first-order distance between the second sequence data and the third sequence data, and a value of the second element is a median value of the first value range.

In a possible design, a shape of input data of the first neural network is the same as a shape of output data of the first neural network, and a shape of the first sequence data is the same as a shape of the second sequence data.

The first sequence data and the second sequence data each are a tensor, and that a shape of the first sequence data is the same as a shape of the second sequence data means that the first sequence data and the second sequence data each are an N-dimensional tensor, and a size of a first dimension in N dimensions of the first sequence data is the same as a size of a second dimension in N dimensions of the second sequence data, where N is an integer greater than or equal to 1, the first dimension is any dimension in the N dimensions of the first sequence data, and the second dimension is a dimension that is in the N dimensions of the second sequence data and that is the same as the first dimension.

In a possible design, the first sequence data is image data, text data, or audio data, and the first neural network is a convolutional neural network, a recurrent neural network, or a fully-connected neural network.

It should be noted that content such as information exchange and an execution process between modules/units in the data processing apparatus 900 is based on a same concept as the method embodiment corresponding to FIG. 8 in this application. For specific content, refer to descriptions in the foregoing method embodiments of this application. Details are not described herein again.

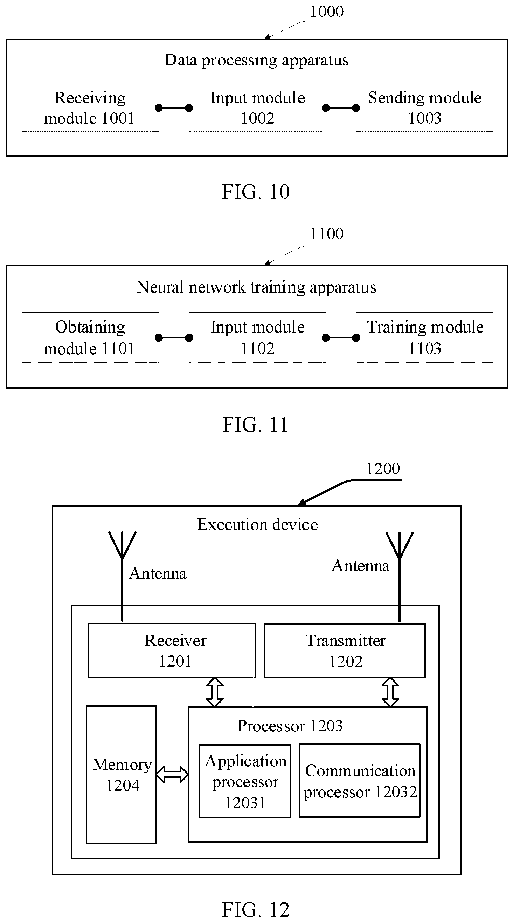

An embodiment of this application further provides a data processing apparatus. FIG. 10 is a schematic diagram of a structure of a data processing apparatus according to an embodiment of this application. A data processing apparatus 1000 is applied to a second execution device, and may include a receiving module 1001, an input module 1002, and a sending module 1003. The receiving module 1001 is configured to receive second sequence data sent by a first execution device, the second sequence data is obtained after the first execution device inputs first sequence data into a first neural network and performs, by using the first neural network, deletion processing on information carried in the first sequence data, and an amount of information carried in the second sequence data is less than an amount of information carried in the first sequence data. The input module 1002 is configured to input the second sequence data into a second neural network, to obtain a prediction result of the second sequence data that is output by the second neural network. The sending module 1003 is configured to send the prediction result of the second sequence data to the first execution device. The first neural network is obtained through training by using a first loss function and a second loss function, the first loss function indicates the amount of information carried in the second sequence data, and the second loss function indicates a similarity between a prediction result of the first sequence data and a correct result of the first sequence data.

In a possible design, the first loss function indicates a distance between the second sequence data and third sequence data. The second sequence data and the third sequence data each include at least one element, a value range of one first element included in the second sequence data is a first value range, a value range of one second element included in the third sequence data is a second value range, a location of the second element in the second sequence data is consistent with a location of the first element in the first sequence data, and the second value range is located in a middle area of the first value range.

In a possible design, the first loss function is a first-order distance between the second sequence data and the third sequence data, and a value of the second element is a median value of the first value range.

It should be noted that content such as information exchange and an execution process between modules/units in the data processing apparatus 1000 is based on a same concept as the method embodiment corresponding to FIG. 8 in this application. For specific content, refer to descriptions in the foregoing method embodiments of this application. Details are not described herein again.

An embodiment of this application further provides a neural network training apparatus. FIG. 11 is a schematic diagram of a structure of a neural network training apparatus according to an embodiment of this application. A neural network training apparatus 1100 is applied to a training device, and may include an obtaining module 1101, an input module 1102, and a training module 1103. The obtaining module 1101 is configured to obtain a training data set, where the training data set includes a plurality of pieces of fourth sequence data and a correct result of each piece of fourth sequence data. The input module 1102 is configured to input the fourth sequence data into a first neural network, to perform, by using the first neural network, deletion processing on information carried in the fourth sequence data, so as to obtain fifth sequence data that is output by the first neural network, and an amount of information carried in the fifth sequence data is less than an amount of information carried in the fourth sequence data. The input module 1102 is further configured to input the fifth sequence data into a second neural network, to obtain a prediction result of the fifth sequence data that is output by the second neural network, and the prediction result of the fifth sequence data is considered as a prediction result of the fourth sequence data. The training module 1103 is configured to train the first neural network based on a first loss function and a second loss function until a preset condition is met, and the first loss function indicates the amount of information carried in the fifth-sequence data. The second loss function indicates a similarity between the prediction result of the fourth sequence data and the correct result of the fourth sequence data.

In a possible design, before the input module 1102 inputs the fourth sequence data into the first neural network, the input module 1102 is further configured to input the fourth sequence data into a third neural network, to obtain the prediction result of the fourth sequence data that is output by the third neural network. The training module 1103 is further configured to train the third neural network based on a third loss function until a preset condition is met, to obtain the second neural network, the third loss function indicates a similarity between the prediction result of the fourth sequence data and a correct result of the fourth sequence data, the second neural network is a trained third neural network, and a parameter of the second neural network is not updated in a training process of the first neural network.

In a possible design, the first loss function indicates a distance between the fifth sequence data and third sequence data. The fifth sequence data and the third sequence data each include at least one element, a value range of one third element included in the fifth sequence data is a first value range, a value range of one second element included in the third sequence data is a second value range, a location of the third element in the fifth sequence data is consistent with a location of the second element in the third sequence data, and the second value range is located in a middle area of the first value range.

In a possible design, the first loss function is a first-order distance between the fifth sequence data and the third sequence data, and a value of the second element is a median value of the first value range.

In a possible design, a shape of input data of the first neural network is the same as a shape of output data of the first neural network, and a shape of first sequence data is the same as a shape of second sequence data. The first sequence data and the second sequence data each are a tensor, and that a shape of the first sequence data is the same as a shape of the second sequence data means that the first sequence data and the second sequence data each are an N-dimensional tensor, and a size of a first dimension in N dimensions of the first sequence data is the same as a size of a second dimension in N dimensions of the second sequence data, where N is an integer greater than or equal to 1, the first dimension is any dimension in the N dimensions of the first sequence data, and the second dimension is a dimension that is in the N dimensions of the second sequence data and that is the same as the first dimension.

It should be noted that content such as information exchange and an execution process between modules/units in the neural network training apparatus 1100 is based on a same concept as the method embodiments corresponding to FIG. 3 to FIG. 7 in this application. For specific content, refer to descriptions in the foregoing method embodiments of this application. Details are not described herein again.

An embodiment of this application further provides an execution device. FIG. 12 is a schematic diagram of a structure of an execution device according to an embodiment of this application. The data processing apparatus 900 described in the embodiment corresponding to FIG. 9 may be deployed on an execution device 1200, to implement a function of the first execution device in the embodiment corresponding to FIG. 8. Alternatively, if a second execution device is represented in a form of a mobile terminal, the data processing apparatus 1000 described in the embodiment corresponding to FIG. 10 may be further deployed on the execution device 1200, to implement a function of the second execution device in the embodiment corresponding to FIG. 8. Specifically, the execution device 1200 includes a receiver 1201, a transmitter 1202, a processor 1203, and a memory 1204 (there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. A part of the memory 1204 may further include a non-volatile random access memory (non-volatile random access memory, NVRAM). The memory 1204 stores a processor and operation instructions, an executable module or a data structure, or a subset thereof, or an extended set thereof. The operation instructions may include various operation instructions used to implement various operations.

The processor 1203 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1203, or may be implemented by using the processor 1203. The processor 1203 may be an integrated circuit chip and has a signal processing capability. In an implementation process, steps in the foregoing methods may be implemented by using a hardware integrated logical circuit in the processor 1203, or by using instructions in a form of software. The processor 1203 may be a general-purpose processor, a digital signal processor (digital signal processor, DSP), a microprocessor, or a microcontroller. The processor 1203 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 1203 may implement or perform the method, the steps, and the logical block diagrams disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps in the foregoing methods in combination with hardware of the processor 1203.

The receiver 1201 may be configured to receive input digit or character information, and generate signal input related to related setting and function control of the execution device. The transmitter 1202 may be configured to output digital or character information through a first interface. The transmitter 1202 may be further configured to send instructions to a disk group through the first interface, to modify data in the disk group. The transmitter 1202 may further include a display device such as a display screen.

In this embodiment of this application, in one case, the application processor 12031 is configured to implement the function of the first execution device in the embodiment corresponding to FIG. 8. For a specific implementation and beneficial effect of executing the function of the first execution device by the application processor 12031, refer to descriptions in the method embodiment corresponding to FIG. 8. Details are not described herein again.

In another case, the application processor 12031 is configured to implement the function of the second execution device in the embodiment corresponding to FIG. 8. For a specific implementation and beneficial effect of executing the function of the second execution device by the application processor 12031, refer to descriptions in the method embodiment corresponding to FIG. 8. Details are not described herein again.

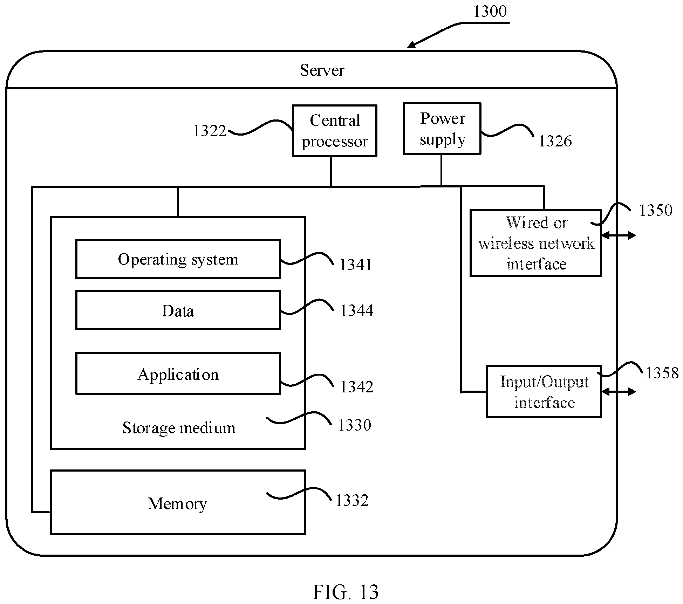

An embodiment of this application further provides a server. FIG. 13 is a schematic diagram of a structure of a server according to an embodiment of this application. The neural network training apparatus 1100 described in the embodiment corresponding to FIG. 11 may be deployed on a server 1300, to implement a function of the training device in the embodiments corresponding to FIG. 3 to FIG. 7. Alternatively, if the second execution device is represented in a form of the server, the data processing apparatus 1000 described in the embodiment corresponding to FIG. 10 may be further deployed on the server 1300, to implement a function of the second execution device in the embodiment corresponding to FIG. 8. Specifically, the server 1300 is implemented by one or more servers. The server 1300 may have a relatively large difference due to different configurations or performance, and may include one or more central processing units (central processing units, CPU) 1322 (for example, one or more processors) and a memory 1332, and one or more storage media 1330 (for example, one or more mass storage devices) that store an application 1342 or data 1344. The memory 1332 and the storage medium 1330 may be transient storage or persistent storage. A program stored in the storage medium 1330 may include one or more modules (not shown in the figure), and each module may include a series of instruction operations for the server. Further, the central processing unit 1322 may be configured to: communicate with the storage medium 1330, and perform, on the server 1300, the series of instruction operations in the storage medium 1330.

The server 1300 may further include one or more power supplies 1326, one or more wired or wireless network interfaces 1350, one or more input/output interfaces 1358, and/or one or more operating systems 1341, such as Windows ServerTM, Mac OS XTM, UnixTM, LinuxTM, and FreeBSDTM.

In this embodiment of this application, in one case, the central processing unit 1322 is configured to implement the function of the training device in the embodiments corresponding to FIG. 3 to FIG. 7. For a specific implementation and beneficial effect of executing the function of the training device by the central processing unit 1322, refer to descriptions in the method embodiments corresponding to FIG. 3 to FIG. 7. Details are not described herein again.

In another case, the central processing unit 1322 is configured to implement the function of the second execution device in the embodiment corresponding to FIG. 8. For a specific implementation and beneficial effect of executing the function of the second execution device by the central processing unit 1322, refer to descriptions in the method embodiment corresponding to FIG. 8. Details are not described herein again.

An embodiment of this application further provides a computer-readable storage medium. The computer-readable storage medium stores a program. When the program is run on a computer, the computer is enabled to perform the steps performed by the training device in the methods described in the embodiments shown in FIG. 3 to FIG. 7, or the computer is enabled to perform the steps performed by the first execution device in the method described in the embodiment shown in FIG. 8, or the computer is enabled to perform the steps performed by the second execution device in the method described in the embodiment shown in FIG. 8.

An embodiment of this application further provides a computer program product. When the computer program product is run on a computer, the computer is enabled to perform the steps performed by the training device in the methods described in the embodiments shown in FIG. 3 to FIG. 7, or the computer is enabled to perform the steps performed by the first execution device in the method described in the embodiment shown in FIG. 8, or the computer is enabled to perform the step performed by the second execution device in the method described in the embodiment shown in FIG. 8.

An embodiment of this application further provides a circuit system. The circuit system includes a processing circuit. The processing circuit is configured to perform the steps performed by the training device in the methods described in the embodiments shown in FIG. 3 to FIG. 7, or the processing circuit is configured to perform the steps performed by the first execution device in the method described in the embodiment shown in FIG. 8, or the processing circuit is configured to perform the steps performed by the second execution device in the method described in the embodiment shown in FIG. 8.

The data processing apparatus, the neural network training apparatus, the first execution device, the second execution device, or the training device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer executable instructions stored in a storage unit, so that the chip performs the neural network training methods described in the embodiments shown in FIG. 3 to FIG. 7, or the chip performs the data processing method described in the embodiment shown in FIG. 8.

Optionally, the storage unit is a storage unit in the chip, for example, a register or a cache; or the storage unit may be a storage unit that is in the radio access device and that is located outside the chip, for example, a read-only memory (read-only memory, ROM), another type of static storage device that can store static information and instructions, or a random access memory (random access memory, RAM).

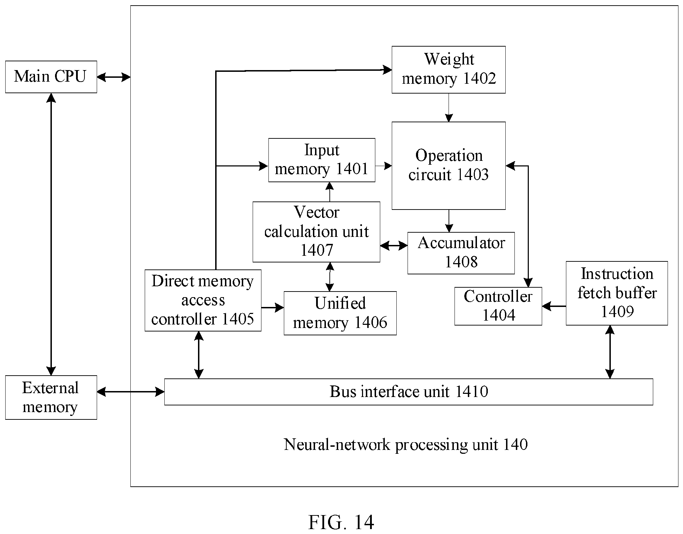

Specifically, FIG. 14 is a schematic diagram of a structure of a chip according to an embodiment of this application. The chip may be represented as a neural-network processing unit NPU 140. The NPU 140 is mounted to a host CPU (Host CPU) as a coprocessor, and the Host CPU allocates a task. A core part of the NPU is an operation circuit 1403. The operation circuit 1403 is controlled by a controller 1404 to extract matrix data in a memory and perform a multiplication operation.

In some implementations, the operation circuit 1403 includes a plurality of process engines (Process Engine, PE) inside. In some implementations, the operation circuit 1403 is a two-dimensional systolic array. The operation circuit 1403 may alternatively be a one-dimensional systolic array or another electronic circuit capable of performing mathematical operations such as multiplication and addition. In some implementations, the operation circuit 1403 is a general-purpose matrix processor.

For example, it is assumed that there are an input matrix A, a weight matrix B, and an output matrix C. The operation circuit fetches, from a weight memory 1402, data corresponding to the matrix B, and buffers the data on each PE in the operation circuit. The operation circuit fetches data of the matrix A from an input memory 1401, to perform a matrix operation on the matrix B, and stores an obtained partial result or an obtained final result of the matrix in an accumulator (accumulator) 1408.

A unified memory 1406 is configured to store input data and output data. Weight data is directly transferred to the weight memory 1402 by using a direct memory access controller (Direct Memory Access Controller, DMAC) 1405. The input data is also transferred to the unified memory 1406 by using the DMAC.

A BIU is a bus interface unit, namely, a bus interface unit 1410, and is used for interaction between an AXI bus and the DMAC and between the AXI bus and an instruction fetch buffer (Instruction Fetch Buffer, IFB) 1409.

The bus interface unit (Bus Interface Unit, BIU for short) 1410 is used by the instruction fetch buffer 1409 to obtain instructions from an external memory, and is further used by the direct memory access controller 1405 to obtain original data of the input matrix A or the weight matrix B from the external memory.

The DMAC is mainly configured to transfer input data in the external memory DDR to the unified memory 1406, or transfer weight data to the weight memory 1402, or transfer input data to the input memory 1401.

A vector calculation unit 1407 includes a plurality of operation processing units; and if necessary, performs further processing such as vector multiplication, vector addition, an exponential operation, a logarithmic operation, or value comparison on an output of the operation circuit. The vector calculation unit 1407 is mainly configured to perform network calculation at a non-convolutional/fully-connected layer in a neural network, for example, batch normalization (batch normalization), pixel-level summation, and upsampling on a feature plane.

In some implementations, the vector calculation unit 1407 can store a processed output vector in the unified memory 1406. For example, the vector calculation unit 1407 may apply a linear function and/or a non-linear function to the output of the operation circuit 1403, for example, perform linear interpolation on a feature plane extracted at a convolutional layer, and for another example, accumulate vectors of values to generate an activation value. In some implementations, the vector calculation unit 1407 generates a normalized value, a value obtained after pixel-level summation, or a combination thereof. In some implementations, the processed output vector can be used as an activated input to the operation circuit 1403. For example, the processed output vector can be used at a subsequent layer in the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private for a hardware architecture of the NPU.

An operation of each layer in the recurrent neural network may be performed by the operation circuit 1403 or the vector calculation unit 1407.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including a dedicated integrated circuit, a dedicated CLU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

**Claims**

1. A data processing method, wherein the method is applied to a first execution device, and the method comprises:

   inputting first sequence data into a first neural network, to perform, by using the first neural network, deletion processing on information carried in the first sequence data, so as to obtain second sequence data, wherein an amount of information carried in the second sequence data is less than an amount of information carried in the first sequence data;

   sending the second sequence data to a second execution device, wherein the second sequence data is used to indicate the second execution device to input the second sequence data into a second neural network, to generate a prediction result of the second sequence data by using the second neural network; and

   receiving the prediction result of the second sequence data that is sent by the second execution device, wherein the prediction result of the second sequence data is considered as a prediction result of the first sequence data, wherein

   the first neural network is obtained through training by using a first loss function and a second loss function, the first loss function indicates the amount of information carried in the second sequence data, and the second loss function indicates a similarity between the prediction result of the first sequence data and a correct result of the first sequence data.

2. The method according to claim 1, wherein the first loss function indicates a distance between the second sequence data and third sequence data; and

   the second sequence data and the third sequence data each comprise at least one element, a value range of one first element comprised in the second sequence data is a first value range, a value range of one second element comprised in the third sequence data is a second value range, a location of the second element in the second sequence data is consistent with a location of the first element in the first sequence data, and the second value range is located in a middle area of the first value range.

3. The method according to claim 2, wherein the first loss function is a first-order distance between the second sequence data and the third sequence data, and a value of the second element is a median value of the first value range.

4. The method according to any one of claims 1 to 3, wherein a shape of input data of the first neural network is the same as a shape of output data of the first neural network, and a shape of the first sequence data is the same as a shape of the second sequence data; and

   the first sequence data and the second sequence data each are a tensor, and that a shape of the first sequence data is the same as a shape of the second sequence data means that the first sequence data and the second sequence data each are an N-dimensional tensor, and a size of a first dimension in N dimensions of the first sequence data is the same as a size of a second dimension in N dimensions of the second sequence data, wherein N is an integer greater than or equal to 1, the first dimension is any dimension in the N dimensions of the first sequence data, and the second dimension is a dimension that is in the N dimensions of the second sequence data and that is the same as the first dimension.

5. The method according to any one of claims 1 to 3, wherein the first sequence data is image data, text data, or audio data, and the first neural network is a convolutional neural network, a recurrent neural network, or a fully-connected neural network.

6. A data processing method, wherein the method is applied to a second execution device, and the method comprises:

   receiving second sequence data sent by a first execution device, wherein the second sequence data is obtained after the first execution device inputs first sequence data into a first neural network and performs, by using the first neural network, deletion processing on information carried in the first sequence data, and an amount of information carried in the second sequence data is less than an amount of information carried in the first sequence data;

   inputting the second sequence data into a second neural network, to obtain a prediction result of the second sequence data that is output by the second neural network; and

   sending the prediction result of the second sequence data to the first execution device, wherein

   the first neural network is obtained through training by using a first loss function and a second loss function, the first loss function indicates the amount of information carried in the second sequence data, and the second loss function indicates a similarity between a prediction result of the first sequence data and a correct result of the first sequence data.

7. The method according to claim 6, wherein the first loss function indicates a distance between the second sequence data and third sequence data; and

the second sequence data and the third sequence data each comprise at least one element, a value range of one first element comprised in the second sequence data is a first value range, a value range of one second element comprised in the third sequence data is a second value range, a location of the second element in the second sequence data is consistent with a location of the first element in the first sequence data, and the second value range is located in a middle area of the first value range.

8. The method according to claim 7, wherein the first loss function is a first-order distance between the second sequence data and the third sequence data, and a value of the second element is a median value of the first value range.

9. A neural network training method, wherein the method is applied to a training device, and the method comprises:

obtaining a training data set, wherein the training data set comprises a plurality of pieces of fourth sequence data and a correct result of each piece of fourth sequence data;
inputting the fourth sequence data into a first neural network, to perform, by using the first neural network, deletion processing on information carried in the fourth sequence data, so as to obtain fifth sequence data that is output by the first neural network, wherein an amount of information carried in the fifth sequence data is less than an amount of information carried in the fourth sequence data;
inputting the fifth sequence data into a second neural network, to obtain a prediction result of the fifth sequence data that is output by the second neural network, wherein the prediction result of the fifth sequence data is considered as a prediction result of the fourth sequence data; and
training the first neural network based on a first loss function and a second loss function until a preset condition is met, wherein the first loss function indicates the amount of information carried in the fifth sequence data, and the second loss function indicates a similarity between the prediction result of the fourth sequence data and the correct result of the fourth sequence data.

10. The method according to claim 9, wherein before the inputting the fourth sequence data into a first neural network, the method further comprises:

inputting the fourth sequence data into a third neural network, to obtain the prediction result of the fourth sequence data that is output by the third neural network; and
training the third neural network based on a third loss function until a preset condition is met, to obtain the second neural network, wherein the third loss function indicates a similarity between the prediction result of the fourth sequence data and the correct result of the fourth sequence data, the second neural network is a trained third neural network, and a parameter of the second neural network is not updated in a training process of the first neural network.

11. The method according to claim 9, wherein the first loss function indicates a distance between the fifth sequence data and third sequence data; and
the fifth sequence data and the third sequence data each comprise at least one element, a value range of one third element comprised in the fifth sequence data is a first value range, a value range of one second element comprised in the third sequence data is a second value range, a location of the third element in the fifth sequence data is consistent with a location of the second element in the third sequence data, and the second value range is located in a middle area of the first value range.

12. The method according to claim 11, wherein the first loss function is a first-order distance between the fifth sequence data and the third sequence data, and a value of the second element is a median value of the first value range.

13. The method according to any one of claims 9 to 11, wherein a shape of input data of the first neural network is the same as a shape of output data of the first neural network, and a shape of a first sequence data is the same as a shape of a second sequence data; and
the first sequence data and the second sequence data each are a tensor, and that a shape of the first sequence data is the same as a shape of the second sequence data means that the first sequence data and the second sequence data each are an N-dimensional tensor, and a size of a first dimension in N dimensions of the first sequence data is the same as a size of a second dimension in N dimensions of the second sequence data, wherein N is an integer greater than or equal to 1, the first dimension is any dimension in the N dimensions of the first sequence data, and the second dimension is a dimension that is in the N dimensions of the second sequence data and that is the same as the first dimension.

14. A data processing apparatus, wherein the apparatus is applied to a first execution device, and the apparatus comprises:

an input module, configured to input first sequence data into a first neural network, to perform, by using the first neural network, deletion processing on information carried in the first sequence data, so as to obtain second sequence data, wherein an amount of information carried in the second sequence data is less than an amount of information carried in the first sequence data;

a sending module, configured to send the second sequence data to a second execution device, wherein the second sequence data is used to indicate the second execution device to input the second sequence data into a second neural network, to generate a prediction result of the second sequence data by using the second neural network; and

a receiving module, configured to receive the prediction result of the second sequence data that is sent by the second execution device, wherein the prediction result of the second sequence data is considered as a prediction result of the first sequence data, wherein

the first neural network is obtained through training by using a first loss function and a second loss function, the first loss function indicates the amount of information carried in the second sequence data, and the second loss function indicates a similarity between the prediction result of the first sequence data and a correct result of the first sequence data.

15. The apparatus according to claim 14, wherein the first loss function indicates a distance between the second sequence data and third sequence data; and

the second sequence data and the third sequence data each comprise at least one element, a value range of one first element comprised in the second sequence data is a first value range, a value range of one second element comprised in the third sequence data is a second value range, a location of the second element in the second sequence data is consistent with a location of the first element in the first sequence data, and the second value range is located in a middle area of the first value range.

16. The apparatus according to claim 15, wherein the first loss function is a first-order distance between the second sequence data and the third sequence data, and a value of the second element is a median value of the first value range.

17. The apparatus according to any one of claims 14 to 16, wherein a shape of input data of the first neural network is the same as a shape of output data of the first neural network, and a shape of the first sequence data is the same as a shape of the second sequence data; and

the first sequence data and the second sequence data each are a tensor, and that a shape of the first sequence data is the same as a shape of the second sequence data means that the first sequence data and the second sequence data each are an N-dimensional tensor, and a size of a first dimension in N dimensions of the first sequence data is the same as a size of a second dimension in N dimensions of the second sequence data, wherein N is an integer greater than or equal to 1, the first dimension is any dimension in the N dimensions of the first sequence data, and the second dimension is a dimension that is in the N dimensions of the second sequence data and that is the same as the first dimension.

18. The apparatus according to any one of claims 14 to 16, wherein the first sequence data is image data, text data, or audio data, and the first neural network is a convolutional neural network, a recurrent neural network, or a fully-connected neural network.

19. A data processing apparatus, wherein the apparatus is applied to a second execution device, and the apparatus comprises:

a receiving module, configured to receive second sequence data sent by a first execution device, wherein the second sequence data is obtained after the first execution device inputs first sequence data into a first neural network and performs, by using the first neural network, deletion processing on information carried in the first sequence data, and an amount of information carried in the second sequence data is less than an amount of information carried in the first sequence data;

an input module, configured to input the second sequence data into a second neural network, to obtain a prediction result of the second sequence data that is output by the second neural network; and

a sending module, configured to send the prediction result of the second sequence data to the first execution device, wherein

the first neural network is obtained through training by using a first loss function and a second loss function, the first loss function indicates the amount of information carried in the second sequence data, and the second loss function indicates a similarity between a prediction result of the first sequence data and a correct result of the first sequence data.

20. The apparatus according to claim 19, wherein the first loss function indicates a distance between the second sequence data and third sequence data; and

the second sequence data and the third sequence data each comprise at least one element, a value range of one first element comprised in the second sequence data is a first value range, a value range of one second element comprised in the third sequence data is a second value range, a location of the second element in the second sequence data is consistent with a location of the first element in the first sequence data, and the second value range is located in a middle area of the first value range.

21. The apparatus according to claim 20, wherein the first loss function is a first-order distance between the second sequence data and the third sequence data, and a value of the second element is a median value of the first value range.

22. A neural network training apparatus, wherein the apparatus is applied to a training device, and the apparatus comprises:

an obtaining module, configured to obtain a training data set, wherein the training data set comprises a plurality of pieces of fourth sequence data and a correct result of each piece of fourth sequence data;

an input module, configured to input the fourth sequence data into a first neural network, to perform, by using the first neural network, deletion processing on information carried in the fourth sequence data, so as to obtain fifth sequence data that is output by the first neural network, wherein an amount of information carried in the fifth sequence data is less than an amount of information carried in the fourth sequence data;

the input module, further configured to input the fifth sequence data into a second neural network, to obtain a prediction result of the fifth sequence data that is output by the second neural network, wherein the prediction result of the fifth sequence data is considered as a prediction result of the fourth sequence data; and

a training module, configured to train the first neural network based on a first loss function and a second loss function until a preset condition is met, wherein the first loss function indicates the amount of information carried in the fifth sequence data, and the second loss function indicates a similarity between the prediction result of the fourth sequence data and the correct result of the fourth sequence data.

23. The apparatus according to claim 22, wherein before the input module inputs the fourth sequence data into the first neural network, the input module is further configured to input the fourth sequence data into a third neural network, to obtain the prediction result of the fourth sequence data that is output by the third neural network; and

the training module is further configured to train the third neural network based on a third loss function until a preset condition is met, to obtain the second neural network, the third loss function indicates the similarity between the prediction result of the fourth sequence data and the correct result of the fourth sequence data, the second neural network is a trained third neural network, and a parameter of the second neural network is not updated in a training process of the first neural network.

24. The apparatus according to claim 22, wherein the first loss function indicates a distance between the fifth sequence data and third sequence data; and

the fifth sequence data and the third sequence data each comprise at least one element, a value range of one third element comprised in the fifth sequence data is a first value range, a value range of one second element comprised in the third sequence data is a second value range, a location of the third element in the fifth sequence data is consistent with a location of the second element in the third sequence data, and the second value range is located in a middle area of the first value range.

25. The apparatus according to claim 24, wherein the first loss function is a first-order distance between the fifth sequence data and the third sequence data, and a value of the second element is a median value of the first value range.

26. The apparatus according to any one of claims 22 to 25, wherein a shape of input data of the first neural network is the same as a shape of output data of the first neural network, and a shape of the first sequence data is the same as a shape of the second sequence data; and

the first sequence data and the second sequence data each are a tensor, and that a shape of the first sequence data is the same as a shape of the second sequence data means that the first sequence data and the second sequence data each are an N-dimensional tensor, and a size of a first dimension in N dimensions of the first sequence data is the same as a size of a second dimension in N dimensions of the second sequence data, wherein N is an integer greater than or equal to 1, the first dimension is any dimension in the N dimensions of the first sequence data, and the second dimension is a dimension that is in the N dimensions of the second sequence data and that is the same as the first dimension.

27. An execution device, comprising a processor, wherein the processor is coupled to a memory, the memory stores program instructions, and when the program instructions stored in the memory are executed by the processor, the method according to any one of claims 1 to 5 is implemented, or the method according to any one of claims 6 to 8 is implemented.

28. A training device, comprising a processor, wherein the processor is coupled to a memory, the memory stores program instructions, and when the program instructions stored in the memory are executed by the processor, the method according to any one of claims 9 to 13 is implemented.

29. A computer-readable storage medium, comprising a program, wherein when the program is run on a computer, the computer is enabled to perform the method according to any one of claims 1 to 5, or the computer is enabled to perform the method according to any one of claims 6 to 8, or the computer is enabled to perform the method according to any one of claims 9 to 13.

30. A circuit system, wherein the circuit system comprises a processing circuit, and the processing circuit is configured to perform the method according to any one of claims 1 to 5, or the processing circuit is configured to perform the method according to any one of claims 6 to 8, or the processing circuit is configured to perform the method according to any one of claims 9 to 13.

Intelligent information chain

Smart product and industry application

| Translation/Text analysis/... | Speech/Visual/ Image/... |

Data

| Data processing | Data training/ Machine learning/ Deep learning | Searching/ Inference/ Decision-making | ... |

Infrastructure | Sensor | Smart chip | Basic platform | ............

IT value chain

**FIG. 1**

Database 230

Training device 220

200

First neural network 201

First execution device 240

Input data

Output data

I/O interface 212

Second execution device 210

Second neural network 202

Calculation module 211

Data storage system 250

**FIG. 2**

A training device obtains a training data set, where the training data set includes a plurality of pieces of fourth sequence data and a correct result of each piece of fourth sequence data  ⟋ 301

The training device inputs the fourth sequence data into a third neural network, to obtain a prediction result of the fourth sequence data that is output by the third neural network  ⟋ 302

The training device trains the third neural network based on a third loss function, where the third loss function indicates a similarity between the prediction result of the fourth sequence data and the correct result of the fourth sequence data  ⟋ 303

The training device inputs the fourth sequence data into a first neural network, to perform, by using the first neural network, deletion processing on information carried in the fourth sequence data, so as to obtain fifth sequence data that is output by the first neural network  ⟋ 304

The training device inputs the fifth sequence data into a second neural network, to obtain a prediction result of the fifth sequence data that is output by the second neural network  ⟋ 305

The training device trains the first neural network based on a first loss function and a second loss function, where the first loss function indicates an amount of information carried in the fifth sequence data, and the second loss function indicates the similarity between the prediction result of the fourth sequence data and the correct result of the fourth sequence data  ⟋ 306

FIG. 3

Image data corresponding to
fourth sequence data

Image data corresponding to
fifth sequence data

FIG. 4

Fourth sequence data

A value of
the third
dimension
is 5

A value of the first
dimension is 8

A value of
the second
dimension
is 3

Fifth sequence data

A value of
the third
dimension
is 5

A value of the first
dimension is 8

A value of
the second
dimension
is 3

FIG. 5

3 3 16 16  32 16 16 3 3

Input
image

224x224

112x112 32

Image obtained
after information
carried in the
input image is
deleted

➡ 3x3 Conv & Relu  ⇨ Copy

⬇ 2x2 Max Pooling  ⬆ 2x2 Upconv

⇨ Normolization

FIG. 6

Correct label •••••••••••••••••••••••••••••••••••••••••••••••••••••••➤ $L_{acc}$

$L\eta$

Prediction label

Input image First neural
network Privacy
image Second neural
network

FIG. 7

| First execution device | | Second execution device |
|---|---|---|
| 801: Input first sequence data into a first neural network, to perform, by using the first neural network, deletion processing on information carried in the first sequence data, so as to obtain second sequence data | | |

802: Second sequence data →

| | 803: Input the second sequence data into a second neural network, to obtain a prediction result of the second sequence data that is output by the second neural network |
|---|---|

← 804: Prediction result of the second sequence data, where the prediction result of the second sequence data is considered as a prediction result of the first sequence data

FIG. 8

900

Data processing apparatus

| Input module 901 | Sending module 902 | Receiving module 903 |
|---|---|---|

FIG. 9

1000

Data processing apparatus

| Receiving module 1001 | Input module 1002 | Sending module 1003 |

FIG. 10

1100

Neural network training apparatus

| Obtaining module 1101 | Input module 1102 | Training module 1103 |

FIG. 11

1200

Execution device

Antenna        Antenna

| Receiver 1201 | Transmitter 1202 |

Processor 1203

Memory 1204

| Application processor 12031 | Communication processor 12032 |

FIG. 12

FIG. 13

FIG. 14

## INTERNATIONAL SEARCH REPORT

| International application No. |
|---|
| **PCT/CN2021/107753** |

**A. CLASSIFICATION OF SUBJECT MATTER**

G06N 3/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNKI, CNPAT, IEEE: 层次化, 神经网络, 深度, 缩小, 收敛, 第一, 第二, 删减, 预测, 连续, 信息量, 数据量, 精确, 张量, optimizing, first, second, decrease, delete, layer, learning, scanning, prediction, sequence, neutral, size

**C. DOCUMENTS CONSIDERED TO BE RELEVANT**

| Category* | Citation of document, with indication, where appropriate, of the relevant passages | Relevant to claim No. |
|---|---|---|
| X | CN 107944488 A (TSINGHUA UNIVERSITY) 20 April 2018 (2018-04-20) abstract, description paragraphs 67, 82-85 | 9-13, 22-30 |
| A | CN 110798227 A (PING AN TECHNOLOGY (SHENZHEN) CO., LTD.) 14 February 2020 (2020-02-14) entire document | 1-30 |
| A | CN 110415022 A (ALIBABA GROUP HOLDING LIMITED) 05 November 2019 (2019-11-05) entire document | 1-30 |
| A | WO 2017031630 A1 (INSTITUTE OF AUTOMATION, CHINESE ACADEMY OF SCIENCES) 02 March 2017 (2017-03-02) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 August 2021** | **28 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/107753**

| Patent document cited in search report | | | Publication date (day/month/year) | Patent family member(s) | | | Publication date (day/month/year) |
|---|---|---|---|---|---|---|---|
| CN | 107944488 | A | 20 April 2018 | None | | | |
| CN | 110798227 | A | 14 February 2020 | WO | 2021051596 | A1 | 25 March 2021 |
| CN | 110415022 | A | 05 November 2019 | None | | | |
| WO | 2017031630 | A1 | 02 March 2017 | US | 2018247180 | A1 | 30 August 2018 |

Form PCT/ISA/210 (patent family annex) (January 2015)

# EP 4 206 989 A1

**REFERENCES CITED IN THE DESCRIPTION**

**Patent documents cited in the description**

- CN 202010957768